# EUROPEAN PATENT APPLICATION

(11) **EP 4 841 867 A1**
(43) Date of publication of application: **18.11.2026**
(21) Application number: 25305685.7
(22) Date of filing: 14.05.2025
(51) Int. Cl.: H02K 3/12, H02K 3/26, H02K 3/50, H02K 9/22

(54) **ELECTRIC MOTOR WITH PCB COIL HEAD DISCS**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: BONNET, Maxime, 35708 RENNES CEDEX 7 (FR); Voyer, Nicolas, 35708 RENNES CEDEX 7 (FR); Lefevre, Guillaume, 35708 RENNES CEDEX 7 (FR)
(74) Representative: Plasseraud IP

(57) **Abstract**

Electric motor comprising a winding having coil conductors (10) received in slots of a core (20) of the motor, said coil conductors being connected to conductor tracks of at least one PCB coil head disc ( 30a, 30b), said PCB coil head disc providing a wiring arrangement of the winding of the motor on a side of said core, and said coil conductors comprise metallic rods or strips made of copper tracks (45, 46) of elongate PCBs (40) received in said slots and having terminals in connection with conductor tracks of said PCB coil head disc.

## Description

### Technical Field

This disclosure pertains to the field of electric motors and concerns winding connection arrangements using coil heads made of PCB discs on which the wires of the windings are connected.

### Background Art

The recent growing demand for electric motors, driven by the automotive industry, has led to technological advances in electric motor windings. With a view to reducing manufacturing costs and improving performance, hairpin conductors have rapidly become the preferred choice. Their rectangular cross-section gives them a very good filling factor in the slots of the stator core. Their assembly process is easily automated. Even with distributed windings, the coil heads remain organized, unlike conventional round-wire coils. However, even with well-organized conductors, the evacuation of heat generated by the Joule losses is a crucial element to consider.

The power density of electric motors is constantly increasing. Today, the drastic increase in power density is achieved by extracting heat directly from the winding. In contrast to round-wire windings, the number of hot spots is limited by hairpin windings. Cooling systems such as oil sprays and forced convection are used to cool these winding heads effectively. However, an additional dedicated motor volume is required. Also, these methods do not cool down the conductors at the heart of the slots. The hot spots remain inaccessible. Channeling techniques in the iron of cylinder heads or through hollow conductors are alternatives to this problem. But this comes at the cost of reduced motor performance.

Coil heads can be replaced by PCB discs or bus bars. These new coil heads make possible the design of motors with a much more compact axial length. These heads are connected either to wires or bars in the slots. Various combinations of windings can be easily produced. Thermal aspects are not treated, and it remains difficult to extract heat from encapsulated internal conductors.

### Summary

Issues with modern electric motors are cooling of the stator coil conductors and connection of these coil conductors to coil heads providing the wiring arrangement of the coil conductors.

In view of such problems, the present disclosure proposes an electric motor comprising a winding having coil conductors received in slots of a core of the motor, said coil conductors being connected to conductor tracks of at least one PCB coil head disc , said PCB coil head disc providing a wiring arrangement of the winding of the motor on a side of said core, wherein said coil conductors comprise metallic rods or strips made of copper tracks of elongate PCBs received in said slots and having terminals in connection with conductor tracks of said PCB coil head disc.

Thus, windings are realized by connection of modular parts. Using easy-to-manufacture modular parts (PCB coil heads and elongate PCBs), complex windings structures can be implemented, that otherwise would be difficult or even impossible to realise with conventional winding techniques. With appropriate interconnections realized at the coil head disc, copper tracks or coil conductors received in a given slot can be individually assigned to current of any phase of the machine, flowing in any direction.

In realization modes which may be alternate or complementary:

The PCB coil head disc comprises heat spreader copper layers connected to conductor tracks of said PCB coil head disc through drain vias, said heat spreader layers being covered by a thermally conducting but electrically insulating layer between said heat spreader copper layers and a coil head heatsink .

Thus, the provision of heat spreader layers allowed by the use of the PCB coil head discs increases the cooling capacity of the motor coil conductors.

At least some of said metallic rods or strips are internal copper tracks of said elongate PCBs received in said slots, terminals of said internal copper tracks being first surface contact pads of said elongate PCBs connected to said internal copper tracks through electric vias.

Thus each internal copper track of a given elongate PCB can individually get electrically and thermally interconnected to coil head PCB through electric vias and first surface contact pad.

At least some of said metallic rods or strips are external copper tracks of elongate PCBs received in said slots and covered with an insulating coating, wherein terminals of said external copper tracks are non-coated second surface contact pads of said elongate PCBs ending said external copper tracks.

Thus each internal copper track of a given elongate PCB can individually get electrically and thermally interconnected to coil head PCB through electric vias and first surface contact pad.

Said elongate PCBs may be provided with two or more of said internal copper layers or external copper layers each forming a coil conductor and inserted in said slots.

Said elongate PCBs may be provided with two or more of said internal copper layers and external copper layers each forming a coil conductor and inserted in said slots, at least one of said two or more metallic strips being an external copper track of said elongate PCBs having a terminal made of a second surface contact pad of said elongate PCBs and at least another of said metallic strips is an internal copper track of said elongate PCBs having a terminal made of a first surface contact pad of said elongate PCBs connected to said internal copper track through one or more electric vias .

Ends of said elongate PCBs provided with said terminals may be received in connector elements provided with spring contacts to provide an electrical contact with said terminals of said metallic rods or strips, said spring contacts being soldered on conductor tracks of said PCB coil head disc.

Thus, the electrical and thermal connection between elongated PCBs and PCB coil head disc is easy to realise despite the possibly large number of elongate PCBs. The position of spring contact helps the positioning of elongate PCBs with respect to the PCB coil heads, and can absorb vibrations while keeping electrical and thermal contact across the lifetime of the motor.

Ends of said elongate PCBs provided with said terminals may be received in recesses or holes in said PCB coil head disc and soldered with conductor tracks of said PCB coil head disc.

Thus, the holes helps the positioning of elongate PCB at the manufacture. The soldering of many elongate PCBs to one coil head disc can be realized in one step with a single solder bath.

Said conductor tracks of said PCB coil head disc may be in contact with a cooling system comprising at least a thermally conducting but electrically insulating layer and a coil head heatsink.

Thus, the heat of each individual copper track of coil conductors is extracted directly to the coil head heatsink. The heat is better extracted from hot spots of the machine, leading to more homogeneous distribution of temperature across winding conductors. The power density of the machine is therefore improved.

Said first and second surface contact pads may be located on either side surface of an end of said elongate PCBs, providing contact elements for perpendicular third surface contact pads located on said PCB coil head disc and connected to conductor tracks of said coil head disk.

The elongate PCBs received in slots of the motor core comprising external copper tracks and internal copper tracks, the internal copper tracks may be connected to external copper heat spreaders of the elongate PCBs through vias.

Thermally conductive but electrically insulating sheets or layers may be positioned between the core and the external copper tracks and spreaders in order to let heat pass from the elongate PCBs to the core without short circuiting the coil conductors.

Thus, the heat from internal copper layers of elongate PCBs is better dissipated through the external heat spreaders towards the stator core. Temperature across internal and external copper layers is more homogeneous, and the power density of the machine is therefore improved. Reversely, in conditions for high iron losses, the heat from the iron core can find a path to the coil head via the conductor coils. As the core is better cooled, the power density of the machine is improved.

The invention concerns also an electric motor comprising a cylindrical core provided with slots parallel to a main axis of said core, said slots receiving elongate PCBs comprising internal copper tracks having first end terminals at both extremities of said elongate PCBs, said first end terminals being first surface contact pads of said elongate PCBs connected to said internal copper tracks through electric vias, said elongate PCBs comprising further external copper tracks covered with an insulating coating and having at both extremities of said elongate PCBS second end terminals being non-coated second surface contact pads of said elongate PCBs and ending said external copper tracks, wherein said first and second surface contact pads are electrically connected to conductor tracks of PCB coil headers at both extremities of the elongate PCBs said both extremities protruding from said core in opposite directions parallel to said main axis.

According to particular embodiments:
The core may comprise slots having elongate PCBs comprising different numbers of elongate conductors from a slot to another.

Thus, unconventional windings structures with uneven number of conductors per slot can be realized, leading to better shaping of sinusoidal of motor flux.

Said core may comprise slots of different height.

Thus, the space left empty by a smaller number of elongate conductor is filled by the core, relaxing saturation and iron losses and improving the cooling performance of the core.

The consecutive slots spacing distance of said slots of said core may be smaller than five times the slots height.

Thus, the core teeth and slot has a very flat shape. The distribution of temperature across core teeth and conductors is more homogeneous, despite any distribution of losses between iron and copper. The copper layers of the conductor coils helps the cooling of hot iron core (at high speeds), and the iron core helps the cooling of hot copper conductors (at high torque).

Thus, use of PCB coil heads helps arranging winding schemes and allows providing a large number of slots (and/or slots per pole and per phase) without increasing the complexity of feasibility or realization. In addition, in case elongate PCBs are used for the coil conductors, the combination of elongate PCB conductors and the PCB disk coil heads allows great freedom in the electrical connection of coil heads. This makes it easy to design complex multi-pole windings that are normally complex to manufacture.

Finally, the large number of slots and/or slots per pole and per phase allowed is favorable to heat dissipation, as it subdivides and distributes the number of heat sources.

### Brief Description of Drawings

Other features, details and advantages will be shown in the following detailed description and on the figures, on which:
Figure 1 is a schematic top view of a motor core with slots receiving coil conductors;
Figures 2A is a schematic perspective view of PCB coil head discs and exemplary coil conductors;
Figure 2B is a schematic side cut view of a motor with bottom and upper PCB coil head discs;
Figure 3 is a schematic top view of a PCB coil head disc part connected to coil conductors on an elongate PCB;
Figures 4A, 4B, 4C are schematic views of elongate PCBs with coil conductors;
Figure 4C is a schematic view of an elongate PCB end connected with PCB coil head disc conductive tracks;
Figure 5 is a side cut schematic view of a PCB coil head disc and coil conductor end connected through a connector;
Figures 6A and 6B are side cut schematic views of two different ways of directly connecting a coil conductor and a PCB coil head disc;
Figures 7A to 7E are schematic views of the assembly of a motor core with PCB coil conductors and bottom and upper PCB coil head discs;
Figure 8A and 8B are schematic side cut views of two embodiments of PCB coil head disc and elongate PCB arrangements;
Figure 9 is a cut view of a motor core with elongate PCB and core heatsink;
Figure 10 is a schematic view of different size slots provided with different size elongate PCBs;
Figures 11A and 11B are cut view of cores with slots of different size.

### Description of Embodiments

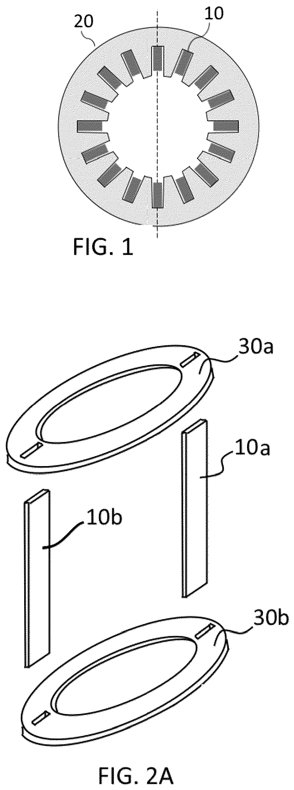

The present disclosure concerns an electric motor comprising a as shown in the schematic view of figure 1 a winding having coil conductors 10 received in slots of a core 20 of the motor.

In the present disclosure the coil conductors comprise metallic rods or strips having two end terminals, at least one of said end terminals being connected to at least one track of a PCB coil head disc 30. In figure 2A, an upper coil head disc 30a and a lower coil head disk 30b receive coil conductors 10a and 10b.

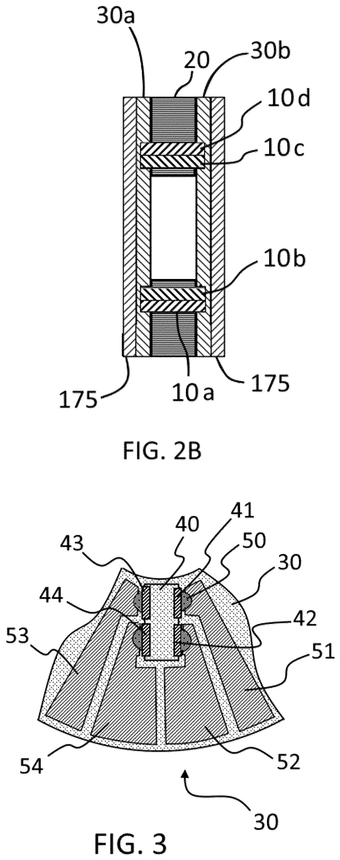

Figure 2B shows a schematic side cut view of a motor in which several coil conductors 10a, 10b, 10c, 10d isolated from each other and passing through slots in the core 20 of the motor have their end terminals received in bottom and upper PCB coil head discs 30a, 30b and electrically connected to tracks in said PCB coil head discs, the tracks together with the coil conductors providing a wiring arrangement of the winding of the motor The coil head discs are covered by heatsinks 175 which will be discussed hereunder.

Preferably, the coil conductors comprise metallic rods or strips having terminals in connection with tracks of said PCB coil head disc.

According to realization modes object of figures 3 to 6B, at least some of the metallic rods or strips are copper tracks of elongate PCBs 40.

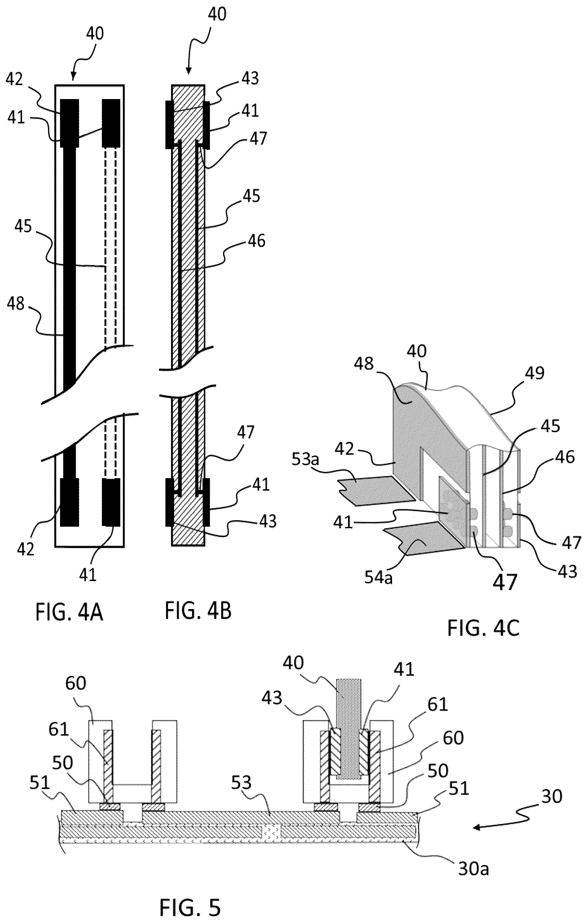

In figure 4A, side view of an elongate PCB, at least some of said metallic rods or strips are external copper tracks 48 of the elongate PCB 40, received in the slots of the core 20 of figure 1, covered with an insulating coating. These copper tracks are terminated by end terminals 42, 44 which are non-coated surface contact pads of said elongate PCB 40.

In figure 4A and figure 4B different side cut views of an example of elongate PCB forming several coil conductors, some of the metallic strips are internal copper layers 45, 46 of the elongate PCB 40 received in the slots of the core of the motor and connected through electric vias 47 to terminals 41, 43 which are first surface contact pads of the elongate PCB 40.

As can be seen in figure 4C, the elongate PCBs 40 may be provided with two or more metallic strips 45, 46, 48, 49 each forming a coil conductor, two conductors being made with external copper tracks 48, 49 directly terminated with terminals 42 and 44, which can be see figure 3, and two conductors being made with internal copper tracks 45, 46 connected to terminals 41, 43 through vias 47. In figure 3 an end of an elongate PCB is shown inserted in a slot of a PCB coil head disc 30 with the end terminals 41, 42, 43, 44 connected to conductor tracks 51, 52, 53, 54 through solder joints 50.

Figures 4A to 4C are only illustrative and do not reflect the dimensions of the elongate PCBs which could be larger than in figure 4A and thinner than in figure 4B or otherwise shaped.

In such case, first and second surface contact pads 41, 43, 42, 44 are located on either side surface of an end of the elongate PCBs 40 and provide contact elements for perpendicular third surface contact pads 53a, 54a on said PCB coil head discs 30.

In such configurations, the elongate PCBs are provided with two or more metallic strips 45, 46, 48, 49 each forming a coil conductor and the elongate PCBs are inserted in the slots of the core allowing to increase the number of coil turns in the winding of the motor.

Several connection methods between tracks of the elongate PCBs and the tracks of the PCB coil heads discs are proposed.

In figure 5, the ends of the elongate PCBs 40 are received in connector elements 60 having a U-shaped profile and provided with spring contacts 61 to provide an electrical contact with the terminals 41, ..., 44 of the elongate PCBs. The spring contacts protruding from the connectors are soldered 50 on conductor tracks 51, 53 of the PCB coil head discs 30, such tracks providing the winding arrangement for the motor.

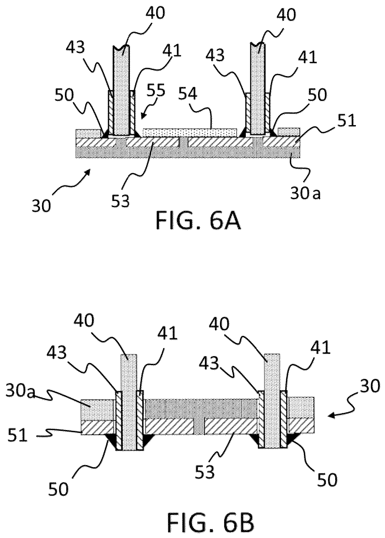

In figure 6A, ends of the elongate PCBs 40 provided with at least two terminals 41, 43 are received in recesses 55 in said PCB coil head disc 30 and soldered 50 with conductor tracks 51, 53 of a PCB coil head disc 30. In such example, the conductor tracks 51, 53 of the PCB coil head disc 30 are covered with an insulating coating in areas around the recesses in order that the solder joints may be done using soldering process using solder paste such as in surface mount components soldering.

In figure 6B, ends of the elongate PCBs 40 provided with at least two terminals 41, 43 are introduced in holes from a first side the PCB coil head disc 30 and soldered 50 with conductor tracks 51, 53 on a second side of the PCB coil head disc 30 opposite to the first side.

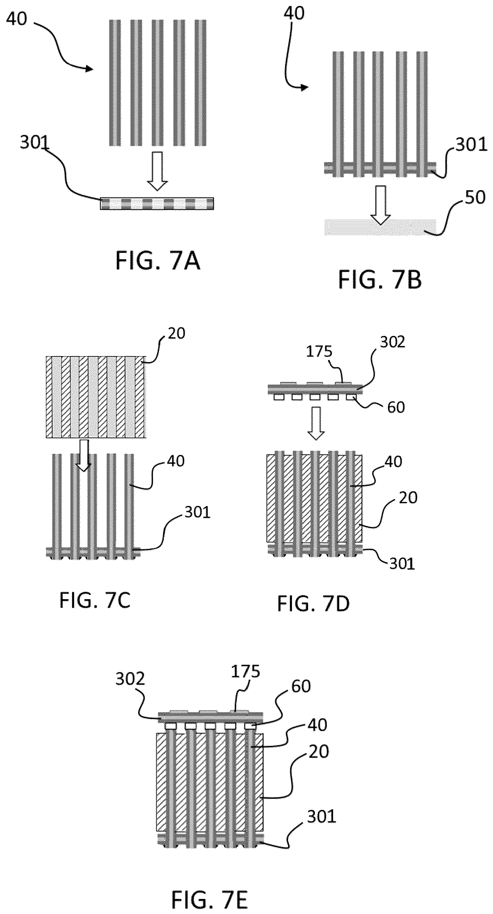

Figures 7A to 7E show a possible manufacturing process where elongate PCBs 40 are first inserted in holes of bottom PCB coil head discs 301 in figure 7A, the assembly of the elongate PCBs 40 inserted in the holes of the bottom PCB coil head discs 301 are wave soldered 50 in figure 7B, the elongate PCBs 40 are inserted in the core of the motor 20 in figure 7C, an upper PCB coil head discs 302 having connector elements 60 is fit onto the upper side of the elongate PCBs in figures 7D and 7E. This provides a compact assembly where the routing is done within the PCB coil head discs and where the upper PCB coil head disc is provided with heatsinks 175 to cool the motor.

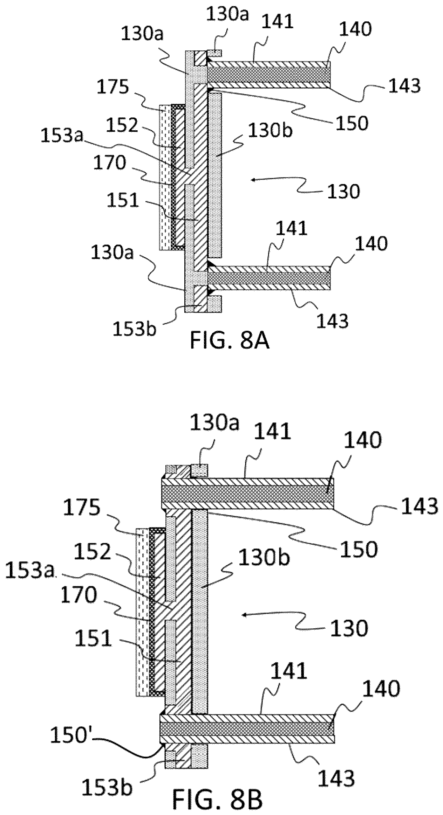

Figure 8A shows a side cut view of an example of PCB coil head disc where the elongate PCBs have their copper tracks 141, 143 soldered 150 on conductor tracks 153a, 153b of the PCB coil head disc 130 as in figure 6A. In such disc, the conductor tracks 153a, 153b are embedded between epoxy layers 130a, 130b. Other copper layers may be present to provide several conductor tracks between several elongate PCB tracks. In this design, the conductor tracks of the PCB coil head discs are connected to heat spreader copper layers 152 of said PCB coil head disc 130 through drain vias 153a, said heat spreader copper layers being covered by an electrically insulating and heat conducting layer 170 between said heat spreader copper layers and a coil head heatsink 175.

Figure 8B is the alternate connection embodiment of the elongate PCBs as in figure 6B where the elongate PCBs are inserted through holes of the PCB coil head discs and soldered 150' on the outer side of said PCB coil head discs where the heatsinks 175 are provided.

Many different configurations may be provided for the interconnection of the PCB coil head discs and elongate PCBs copper tracks. The copper tracks may be soldered to PCB coil head discs conductor tracks on both sides of the elongate PCBs, the copper tracks may be connected to PCB coil head discs conductor tracks through connectors 60 on both sides of the elongate PCBs or one side of the elongate PCBs may have their tracks soldered to PCB coil head discs conductor tracks and the other side use connectors like in figure 7E. This allows a great flexibility in the manufacturing process where solder wave may be used for the embodiment of figure 6B and surface mount processes may be used for the embodiment of figure 6A or the soldering of connectors of the PCB coil head as in figure 5.

Concerning cooling, at least one heatsink 175 and heat conducting element but electrically insulating element 170 of figure 8B may be at least partially annular and in contact with the contact elements 51 to 54 of figure 3 which then are also used for cooling the motor.

Depending on the cooling needs a heatsink 175 may be provided on one of the coil heads or both coil heads. Such heatsinks may also have cooling fins to provide an increased cooling capacity.

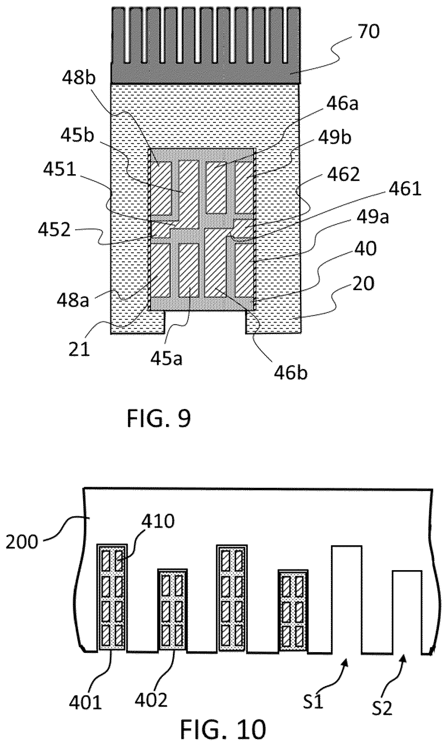

Figure 9 shows a detail of a metallic motor core 20 cut perpendicularly to an elongate PCB 40 received in a slot of the motor core 20. The elongate PCB comprises four external copper tracks 48a, 48b, 49a, 49b and four internal copper tracks 45a, 45b, 46a, 46b. The internal copper tracks are connected to copper heat spreaders 452, 462 through vias 451, 461. It should be noted that internal copper tracks 45a, 46a and 45b, 46b are alternatively connected to copper heat spreaders at at least one height of the elongate PCB. Thermally conductive but electrically insulating sheets or layers 21 are positioned between the core and the external copper tracks and spreaders in order to let heat pass from the elongate PCBs to the core without short circuiting the tracks. To enhance cooling, a core heatsink 70 may be affixed to the motor core.

The advantage is that the copper tracks and copper heat spreaders offer a good heat exchange surface. What's more, all copper tracks can be in contact with the cooling system directly or through the copper heat spreaders, even those in the heart of the slots, which are normally difficult to access.

The present disclosure makes it possible to have slots with different numbers of conductors from a slot to another as shown in figure 10 where slots S1 receive first elongate PCBs 401 with a first number of conductors 410 (here eight conductors and slots S2 receive second elongate PCBs 402 with a second number of conductors (here six conductors).

This offers a new degree of freedom for windings design rules and allows to reduce the current ripple through evening the magnetic flux for multiphase motors. In case the slots are of a same height, e.g. height of the slots S1 receiving the second elongate PCBs 402, free space caused by the smaller PCbs may be filled with other devices like sensors. By increasing the number of slots, the stator core volume can be reduced without impacting motor electromagnetic performances, such slots receiving less conductors per slots. Such a stator core offers a higher surface in contact with external volume which increases stator thermal cooling.

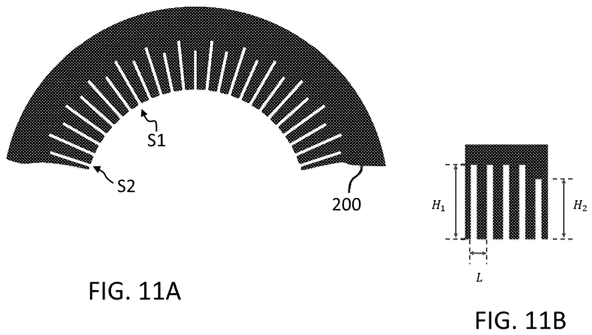

Figures 11A and 11B illustrate a kind of stator core where the consecutive slots spacing distance L vis smaller than five times the slots height H1 and H2. Such a design which reduces the number of conductors per slot provides a more homogeneous temperature in the core and better cooling of the stator. This may be done with a core having slots of only one height or slots of different height as in the figure.

The invention object of the appended claims is not limited to the above examples and in particular the PCB coil head discs may have more than one or two copper layers depending on the complexity of the winding of the motor and the number of electrical poles of such motor and the elongate PCBs may have more than two copper layers.

## Claims

1. - Electric motor comprising a winding having coil conductors (10) received in slots of a core (20) of the motor, said coil conductors being connected to conductor tracks of at least one PCB coil head disc ( 30a, 30b), said PCB coil head disc providing a wiring arrangement of the winding of the motor on a side of said core, wherein said coil conductors comprise metallic rods or strips made of copper tracks (45, 46) of elongate PCBs (40) received in said slots and having terminals in connection with conductor tracks of said PCB coil head disc.

2. - Electric motor according to claim 1 wherein the PCB coil head disc (130) comprises heat spreader copper layers (152) connected to conductor tracks (151) of said PCB coil head disc (130) through drain vias (153), said heat spreader layers being covered by a thermally conducting but electrically insulating layer (170) between said heat spreader copper layers and a coil head heatsink (175).

3. - Electric motor according to claim 1 or 2, wherein at least some of said metallic rods or strips are internal copper tracks (45, 46) of said elongate PCBs (40) received in said slots, terminals (41, 43) of said internal copper tracks being first surface contact pads of said elongate PCBs connected to said internal copper tracks (45, 46) through electric vias (47).

4. - Electric motor according to claim 1, 2 or 3, wherein at least some of said metallic rods or strips are external copper tracks (48, 49) of elongate PCBs received in said slots and covered with an insulating coating, wherein terminals (42, 44) of said external copper tracks are non-coated second surface contact pads of said elongate PCBs (40) ending said external copper tracks.

5. - Electric motor according to claim 3 or 4, wherein said elongate PCBs (40) are provided with two or more of said internal copper tracks and/or external copper tracks(45, 46, 48, 49) each forming a coil conductor and inserted in said slots.

6. - Electric motor according to claims 3 and 4, wherein said elongate PCBs are provided with two or more of said internal copper layers and external copper layers (45, 46, 48, 49) each forming a coil conductor and are inserted in said slots, at least one of said two or more metallic strips being an external copper track (48, 49) of said elongate PCBs having a terminal made of a second surface contact pad (42, 44) of said elongate PCBs and at least another of said metallic strips is an internal copper track (45, 46) of said elongate PCBs having a terminal made of a first surface contact pad (41, 43) of said elongate PCBs connected to said internal copper track through one or more electric vias (47).

7. - Electric motor according to any one of the preceding claims, wherein ends of said elongate PCBs provided with said terminals are received in connector elements (60) provided with spring contacts (61) to provide an electrical contact with said terminals of said metallic rods or strips, said spring contacts being soldered (50) on tracks (51, 53) of said PCB coil head disc (30).

8. - Electric motor according to any one of claims 1 to 6, wherein ends of said elongate PCBs provided with said terminals (41, 42, 43, 44) are received in recesses or holes in said PCB coil head disc (30) and soldered (50) with conductor tracks (51, 52, 53, 54) of said PCB coil head disc (30).

9. - Electric motor according to claim 8, wherein said conductor tracks (51, 52, 53, 54) of said PCB coil head disc (30) are in contact with a cooling system comprising at least a thermally conducting but electrically insulating layer (170) and a coil head heatsink (175).

10. - Electric motor according to claim 6, wherein said first and second surface contact pads (41, 43, 42, 44) are located on either side surface of an end of said elongate PCBs providing contact elements for perpendicular third surface contact pads (53a, 54a) located on said PCB coil head disc (30) and connected to conductor tracks of said coil head disk.

11. - Electric motor according to claim 5 wherein the elongate PCBs (40) received in slots of the motor core (20) comprising external copper tracks (48a, 48b, 49a, 49b) and internal copper tracks (45a, 45b, 46a, 46b), the internal copper tracks are connected to external copper heat spreaders (452, 462) of the elongate PCBs through vias (451, 461) and wherein thermally conductive but electrically insulating sheets or layers (21) are positioned between the core and the external copper tracks and spreaders in order to let heat pass from the elongate PCBs to the core without short circuiting the tracks.

12. - Electric motor according to any one of the preceding claims comprising a cylindrical core provided with slots parallel to a main axis of said core, said slots receiving elongate PCBs comprising internal copper tracks (45, 46) having first end terminals (41, 43) at both extremities of said elongate PCBs, said first end terminals being first surface contact pads of said elongate PCBs connected to said internal copper tracks (45, 46) through electric vias (47), said elongate PCBs comprising further external copper tracks (48, 49) covered with an insulating coating and having at both extremities of said elongate PCBS second end terminals (42, 44) being non-coated second surface contact pads of said elongate PCBs (40) and ending said external copper tracks, wherein said first and second surface contact pads are electrically connected to conductor tracks of PCB coil headers at both extremities of the elongate PCBs said both extremities protruding from said core in opposite directions parallel to said main axis.

13. - Electric motor according to any one of the preceding claims wherein said core (200) comprises slots (S1, S2) having elongate PCBs (401, 402) comprising different numbers of elongate conductors (410) from a slot to another.

14. - Electric motor according to any one of the preceding claims wherein said core comprises slots of different height

15. - Electric motor according to any one of the preceding claims wherein the consecutive slots spacing distance (L) of said slots of said core is smaller than five times the slots height (H1, H2).
